# EUROPÄISCHE PATENTSCHRIFT

(11) **EP 3 422 234 B1**
(45) Veröffentlichungstag und Bekanntmachung des Hinweises auf die Patenterteilung: **02.12.2020**
(21) Anmeldenummer: 17178650.2
(22) Anmeldetag: 29.06.2017
(51) Int. Cl.: G06F 21/53

(54) **CONTAINER-IMAGE, COMPUTERPROGRAMMPRODUKT UND VERFAHREN**
CONTAINER IMAGE, COMPUTER PROGRAM PRODUCT AND METHOD
IMAGE DE CONTENEUR, PRODUIT-PROGRAMME INFORMATIQUE ET PROCÉDÉ

(43) Veröffentlichungstag der Anmeldung: 02.01.2019
(73) Patentinhaber: Siemens Aktiengesellschaft, 80333 München (DE)
(72) Erfinder: Aschauer, Hans Dr., 81829 München (DE); Falk, Rainer Dr., 85586 Poing (DE); Schneider, Daniel, 80796 München (DE)

(56) Entgegenhaltungen:
- US-A1- 2014 082 690
- US-B1- 8 694 781
- Dmitry Kartashov ET AL: "Virtual HSM Implementation in OpenVZ Containers", Proceeding of The 15TH CONFERENCE OF FRUCT ASSOCIATION, 25. April 2014 (2014-04-25), XP055397387, Gefunden im Internet: URL:https://fruct.org/publications/abstrac t15/files/Kar.pdf [gefunden am 2017-08-09]

## Beschreibung

Die vorliegende Erfindung betrifft ein Container-Image für eine Containerausführungsumgebung, ein Computerprogrammprodukt zum Speichern des Container-Images sowie ein Verfahren.

Softwarecontainer werden häufig verwendet, um Applikationen bzw. Dienste auf einer Hardwareplattform zu installieren. Dazu wird ein Container-Image, das die erforderlichen Dateien umfasst, zu der Hardwareplattform gebracht und in einer isolierten Containerausführungsumgebung ausgeführt. Es besteht ein Bedarf an sicheren Softwarecontainern.

Es ist bekannt, Softwarecontainer voneinander und von der Hardwareplattform zu separieren, um zu verhindern, dass ein Container einen anderen Container oder die Hardwareplattform manipuliert.

Das Dokument von Dmitry Kartashov ET AL mit dem Titel "Virtual HSM Implementation in OpenVZ Containers", Proceeding of The 15TH CONFERENCE OF FRUCT ASSOCIATION, 25. April 2014, XP055397387 beschreibt das Konzept eines virtuellen Hardware-Sicherheitsmoduls, welches auf der Idee basiert, sensitive Daten und kryptographische Operationen in einer isolierten virtuellen Umgebung zu verkapseln.

Das Dokument US 8 694 781 B1 beschreibt die Funktionsweise eines Hardware-Sicherheitsmoduls in einem Rechnersystem basierend auf einer virtuellen Maschine (virtual machine), wobei das Sicherheitsmodul innerhalb der virtuellen Maschine ausgeführt wird.

Das Sicherheitsmodul kann Hardware-Sicherheitsmodul-Operationen für mehrere andere virtuelle Maschinen ausführen, wobei der Datenaustausch zwischen der virtuellen Maschine des Sicherheitsmoduls und den anderen virtuellen Maschinen über einen virtuellen Maschinenmonitor erfolgt, um das Sicherheitsmodul vor Angriffen zu schützen.

Vor diesem Hintergrund besteht eine Aufgabe der vorliegenden Erfindung darin, ein verbessertes Container-Image bereitzustellen, um die Sicherheit der anderen Container und der Hardwareplattform zu erhöhen. Eine weitere Aufgabe besteht darin, ein verbessertes Computerprogrammprodukt und ein verbessertes Verfahren bereitzustellen.

Die vorliegende Erfindung ist in den unabhängigen Ansprüchen definiert. Demgemäß wird ein Container-Image vorgeschlagen, welches, wenn es in einer zugehörigen Containerausführungsumgebung einer Hardwareplattform ausgeführt wird, einen Sicherheitsmodulcontainer ausbildet. Der Sicherheitsmodulcontainer ist ein Softwarecontainer, der dazu eingerichtet ist, mindestens eine kryptographische Sicherheitsfunktion eines Hardware-Sicherheitsmoduls durchzuführen, wobei die mindestens eine kryptographische Sicherheitsfunktion umfasst: Authentisieren der Hardwareplattform, auf der der Sicherheitsmodulcontainer ausgeführt wird.

Die Hardwareplattform kann ein computerbasiertes-Gerät, insbesondere ein privater Rechner (PC), eine Computerhardware, oder ein Backend-System sein. Die Containerausführungsumgebung, im Folgenden auch nur Ausführungsumgebung, ist beispielsweise eine Docker- oder RKT-Plattform, die ein Container-Image ausführen kann, um ein Softwarecontainer auszubilden. Insbesondere sind sowohl das Container-Image als der Softwarecontainer virtuelle Softwareelemente und keine physische Hardwareelemente.

Ein Container-Image ist insbesondere ein ausführbares Datenbündel, welche alle Dateien enthält, die notwendig sind, um eine gegebene Software laufen zu lassen. Beispielsweise umfasst das Container-Image Programmiercode, Konfigurationsdaten, Metadaten, Image-Signaturen, Software-Bibliotheken usw. Das Container-Image kann alle notwendigen Elemente enthalten, um einen Softwarecontainer zu erstellen. Wenn das Container-Image durch die Ausführungsumgebung ausgeführt wird, kann ein Softwarecontainer entstehen.

Der Softwarecontainer ist insbesondere ein ausgeführtes Container-Image. Ein Softwarecontainer kann auch verkürzt als "Container" bezeichnet werden. Der Softwarecontainer kann isoliert von der Ausführungsumgebung und der Host-Hardwareplattform laufen. Wenn er dazu konfiguriert ist, kann der Softwarecontainer auch auf die Hardwareplattform zugreifen. Der Softwarecontainer ist zum Beispiel ein Docker-Container, welcher in einer Docker-Runtime bzw. Ausführungsumgebung auf einem Linux System ausgeführt werden kann. Insbesondere wird der Softwarecontainer in einer speziellen, sichereren Ausführungsumgebung ausgeführt, zum Beispiel in einer Ausführungsumgebung mit einer RAM-Speicherverschlüsselung oder einer Hardware-basierten oder Hardware-gebundenen Schlüsselspeicherung.

Insbesondere wird beim Ausführen des Container-Images der Sicherheitsmodulcontainer als der Softwarecontainer erzeugt. Dieser Sicherheitsmodulcontainer kann dazu geeignet sein, zumindest einen Teil der kryptographischen Sicherheitsfunktionen eines physischen Hardware-Sicherheitsmoduls (HSM) durchzuführen. Das physische Hardware-Sicherheitsmodul ist hierbei insbesondere nicht Teil des Container-Images und auch nicht des Sicherheitsmodulcontainers. Das physische Hardware-Sicherheitsmodul ist ein übliches HSM, welches zur sicheren Ausführung kryptographischer Operationen oder Applikationen geeignet sein kann.

Der Sicherheitsmodulcontainer bietet die Funktionalität eines physischen Hardware-Sicherheitsmoduls, ohne jedoch selbst ein physisches Hardware-Sicherheitsmodul zu sein oder zu enthalten. Der Sicherheitsmodulcontainer kann insbesondere von einem oder mehreren weiteren Softwarecontainern angesprochen werden, um die von dem Sicherheitsmodulcontainer realisierten kryptographischen Sicherheitsfunktionen zu verwenden. Der Sicherheitsmodulcontainer kann dabei in einer Variante auf eine Sicherheitsfunktion derjenigen Ausführungsumgebung zugreifen, auf der er ausgeführt wird. Dabei kann es sich z.B. um eine Funktionalität zur Hardware-basierten Schlüsselspeicherung oder um eine Hardware-Identifizierung oder um eine Hardware-Authentisierung der Ausführungsumgebung handeln. Dadurch kann der Sicherheitsmodulcontainer durch ihn verwaltete kryptographische Schlüssel geschützt unter Verwendung einer Hardwarespezifischen Sicherheitsfunktion der Ausführungsumgebung des Sicherheitsmodulcontainer speichern. Dadurch wird ein hoher Hardware-basierter Schutz für einen als Softwarecontainer realisierten Sicherheitsmodulcontainer erreicht. Weiterhin ist kein separates physisches Hardware Security Modul erforderlich.

Die kryptographischen Sicherheitsfunktionen des HSM, die durch den Sicherheitsmodulcontainer realisierbar sind, umfassen insbesondere einen Umgang mit kryptographischen Schlüssel und ein Ent- und Verschlüsseln von Daten. Diese Sicherheitsfunktionen werden im Folgenden noch näher beschrieben.

Insbesondere wird das Hardware-Sicherheitsmodul als ein Software-Sicherheitsmodulcontainer realisiert. Hierbei wird insbesondere Hardware durch Software ersetzt. Der Sicherheitsmodulcontainer kann als ein virtuelles Sicherheitsmodul, eine virtuelle Chipkarte oder ein virtueller Sicherheitstoken ausgeführt sein. Ferner kann die Funktionalität des Hardware-Sicherheitsmoduls durch einen ladbaren Sicherheitsmodulcontainer definiert werden. In dem Sicherheitsmodulcontainer können die kryptographischen Sicherheitsfunktionen insbesondere isoliert von der Hardwareplattform und von weiteren Containern ausgeführt werden.

Der Sicherheitsmodulcontainer kann als Software auf einfache Weise aktualisiert, verändert und angepasst werden, welches bei Hardware, insbesondere bei einem physischen HSM, schwierig oder sogar unmöglich ist. Das Container-Image und der Sicherheitsmodulcontainer bieten somit ein flexibles und aktualisierbares Sicherheitsmodul für die Hardwareplattform.

Gemäß einer Ausführungsform umfasst die mindestens eine kryptographische Sicherheitsfunktion:
Ausführen eines kryptographischen Algorithmus;
Speichern und/oder Ermitteln eines kryptographischen Schlüssels;
Verschlüsseltes Speichern von Daten;
Verschlüsseln von Daten;
Entschlüsseln von Daten;
Authentisieren der Hardwareplattform, auf der der Sicherheitsmodulcontainer ausgeführt wird;
Authentisieren eines weiteren Softwarecontainers;
Speichern einer Initialisierungsinformation eines Pseudozufallszahlengenerators;
Generieren von Pseudozufallszahlen mit dem Pseudozufallszahlengenerator; und/oder
Zugreifen auf einen Hardware-Trust-Anchor der Hardware-plattform.

Zum Beispiel kann der Sicherheitsmodulcontainer einen kryptographischen Algorithmus durchführen, insbesondere kryptographischer Operationen oder Applikationen sicher durchführen.

Der Sicherheitsmodulcontainer kann auch dazu geeignet sein, einen kryptographischen Schlüssel zu speichern und/oder selbst zu ermitteln. Beispielsweise ist der kryptographische Schlüssel bereits in dem Container-Image vorhanden. Alternativ oder zusätzlich kann der kryptographische Schlüssel auch bei der Ausführung des Container-Images auf der Hardwareplattform ermittelt werden, zum Beispiel anhand einer Schlüsselableitungsfunktion, und in dem Sicherheitsmodulcontainer gespeichert werden. In einer Variante wird ein Schlüssel abhängig von einer Identifizierungsinformation der Ausführungsumgebungs-Hardware gebildet. In einer weiteren Variante wird ein Schlüssel innerhalb der ausgeführten Containersoftware (Container) und/oder innerhalb des Containerimages des Sicherheitsmodulcontainers kryptographisch geschützt gespeichert (In-Memory-Encryption, Data at Rest Encryption), wobei ein von der Ausführungsumgebungs-Hardware oder von der Ausführungsumgebungs-Instanz abhängiger Schlüssel verwendet wird.

Der Sicherheitsmodulcontainer kann den kryptographischen Schlüssel auch von dem Hardware-Trust-Anchor der Hardware-plattform erhalten. Hierzu kann der Sicherheitsmodulcontainer beispielsweise auf den Hardware-Trust-Anchor zugreifen, wobei der Sicherheitsmodulcontainer insbesondere auf Hardwaregebundene kryptographische Schlüssel zugreifen kann. Diesen Hardware-gebundenen kryptographischen Schlüssel kann der Sicherheitsmodulcontainer Speichern und/oder zum Durchführen von diversen kryptographischen Algorithmen verwenden.

Mit dem kryptographischen Schlüssel kann der Sicherheitsmodulcontainer zum Beispiel von der Hardwareplattform empfangene Daten entschlüsseln oder an die Hardwareplattform zu versendende Daten verschlüsseln. Es können auch Daten des Container-Images mit dem kryptographischen Schlüssel entschlüsselt werden. Der Sicherheitsmodulcontainer kann auch Daten, zum Beispiel Konfigurationsdaten, empfangene Daten, kryptographische Schlüssel oder selbst erzeugte Daten, verschlüsselt speichern. Zum verschlüsselten Speichern der Daten kann der Sicherheitsmodulcontainer den kryptographischen Schlüssel anwenden.

Der Sicherheitsmodulcontainer kann auch dazu geeignet sein, die Hardwareplattform, auf der der Sicherheitsmodulcontainer ausgeführt wird, oder einen weiteren Softwarecontainer zu authentisieren. Hierzu kann der Sicherheitsmodulcontainer einen kryptographischen Challenge-Response-Protokoll oder ein EPID-Authentisierungsprotokoll (EPID: "enhanced privacy ID") anwenden. Weiterhin kann der Sicherheitsmodulcontainer eine kryptographisch geschützte Bestätigung (Attestierung) der Ausführungsplattform prüfen oder im Rahmen einer kryptographischen Funktion verwenden. Dadurch kann der Sicherheitsmodulcontainer die Integrität der Ausführungsumgebung prüfen. Die Attestierung kann insbesondere die Integrität der Hardwareplattform bestätigen (Tamper-Schutz gegen physikalische Manipulation) und/oder der Ausführungsumgebungs-Softwareplattform (Container Runtime).

Der Sicherheitsmodulcontainer kann ferner dazu eingerichtet sein, eine Initialisierungsinformation bzw. Seed eines Pseudozufallszahlengenerators zu Speichern. Insbesondere mit dieser Initialisierungsinformation kann der Sicherheitsmodulcontainer dann Pseudozufallszahlen mit dem Pseudozufallszahlengenerator generieren.

Gemäß einer weiteren Ausführungsform erfolgt das Ermitteln des kryptographischen Schlüssels unter Berücksichtigung einer Sicherheitsstufe der Hardwareplattform und/oder der Containerausführungsumgebung.

Die Sicherheitsstufe ist insbesondere ein Indikator dafür, wie sicher die Hardwareplattform oder die Containerausführungsumgebung ist. Beispielsweise kann eine niedrige Sicherheitsstufe für eine generische bzw. nicht geschützte Containerausführungsumgebung bestimmt werden. Für eine Software-geschützte Containerausführungsumgebung kann eine mittlere Sicherheitsstufe bestimmt werden, und für eine Hardware-geschützte Containerausführungsumgebung kann eine große Sicherheitsstufe bestimmt werden.

Besonders sichere Ausführungsumgebungen sind solche, die beispielsweise eine RAM-Speicherverschlüsselung oder separate Zusatzmodule für die Sicherheit, so wie einen HSM-Schutz, verwenden. Ferner können sichere Ausführungsumgebungen zum Beispiel nur über eine lokale Schnittstelle (I2C, USB, SPI, usw.) zugreifbar sein, und keine eigene Ethernet- oder IP-Schnittstelle aufweisen.

In Ausführungsformen wird die Sicherheitsstufe der Hardware-plattform und/oder der Containerausführungsumgebung durch den Sicherheitsmodulcontainer bestimmt. Je nachdem, welche Sicherheitsstufe für die Hardwareplattform und/oder die Containerausführungsumgebung bestimmt wird, können unterschiedliche kryptographische Schlüssel ermittelt werden, die der Sicherheitsstufe entsprechen.

Die Verwendung von unterschiedlichen kryptographischen Schlüsseln ist besonderes dann nützlich, wenn ein Entschlüsseln von bestimmten verschlüsselten Daten des Container-Images nur in einer Containerausführungsumgebung mit einer vorgegebenen Sicherheitsstufe, zum Beispiel mit der großen Sicherheitsstufe, stattfinden soll. Wird in diesem Fall das Container-Image in einer Containerausführungsumgebung mit einer Sicherheitsstufe, die niedriger als die vorgegebene Sicherheitsstufe ist, ausgeführt, so wird ein kryptographischer Schlüssel ermittelt, der ein Entschlüsseln der bestimmten verschlüsselten Daten nicht ermöglicht, wodurch diese Daten geschützt werden können. Falls das Container-Image in einer Containerausführungsumgebung mit einer Sicherheitsstufe, die zumindest so hoch wie die vorgegebene Sicherheitsstufe ist, ausgeführt wird, so wird ein kryptographischer Schlüssel ermittelt, der ein Entschlüsseln der bestimmten verschlüsselten Daten ermöglicht, wodurch auf die verschlüsselten Daten zugegriffen werden kann.

Beispielsweise wird ein Zugriff auf geheime oder für die Sicherheit relevante Daten des Container-Images nur in vorgegebenen, insbesondere geschützten, Ausführungsumgebungen oder Hardwareplattformen zugelassen. Dadurch wird ein Schutz des Container-Images gewährleistet.

Gemäß einer weiteren Ausführungsform ist der kryptographische Schlüssel derart an einen vorbestimmten Hardwareplattformtyp gebunden, dass der Sicherheitsmodulcontainer die mindestens eine Sicherheitsfunktion nur durchführen kann, wenn ein Hardwareplattformtyp der Hardwareplattform dem vorbestimmten Hardwareplattformtyp entspricht. Ein Hardwareplattformtyp kann entweder ein einzelnes, individuelles Gerät bezeichnen, oder eine Gruppe von Geräten, die in bestimmten Merkmalen übereinstimmen (z.B. Herstellungsdatum, Kundenprojektzugehörigkeit), oder alle Geräte, die auf derselben Hardwareplattform basieren.

Insbesondere ist der kryptographische Schlüssel bereits in dem Container-Image enthalten. Der kryptographische Schlüssel ermöglicht dem Sicherheitsmodulcontainer beispielsweise nur auf einer vorbestimmten Hardwareplattform zu laufen. Falls die Hardwareplattform eine andere als die vorbestimmte Hardware-plattform ist, kann der Sicherheitsmodulcontainer insbesondere seine kryptographische Sicherheitsfunktion nicht durchführen. Falls die Hardwareplattform der vorbestimmten Hardwareplattform entspricht, kann der Sicherheitsmodulcontainer insbesondere seine kryptographische Sicherheitsfunktion durchführen.

Insbesondere kann die kryptographische Sicherheitsfunktion des Sicherheitsmodulcontainers nur auf einer bestimmten, zulässigen Hardwareplattform durchgeführt werden. Der Sicherheitsmodulcontainer kann sich somit selbst vor nicht sicheren Hardwareplattformen sichern.

Gemäß einer weiteren Ausführungsform ist der Sicherheitsmodulcontainer dazu eingerichtet, kryptographisch verschlüsselte Daten mit einem weiteren Softwarecontainer auszutauschen.

Der weitere Softwarecontainer ist insbesondere ein regulärer Softwarecontainer, also kein Sicherheitsmodulcontainer. Insbesondere kann der weitere Softwarecontainer keine Funktion des HSM durchführen. Obwohl der Sicherheitsmodulcontainer an die Hardwareplattform gebunden ist, kann von dem weiteren Softwarecontainer über eine übliche Container-Kommunikationsschnittstelle genutzt werden. Der weitere Softwarecontainer und der Sicherheitsmodulcontainer können über die übliche Container-Kommunikationsschnittstelle, zum Beispiel über eine virtuelle Netzwerk-Schnittstelle, Daten austauschen. Der Datenaustausch erfolgt dabei unter Verwendung eines Netzwerkprotokolls, z.B. CoAP (Constrained Application Protocol) oder REST (Representational State Transfer). Insbesondere wird ein kryptographisches Netzwerkkommunikationsprotokoll, beispielsweise TLS (Transport Layer Security) oder IPsec (Internet Protocol Security), eingesetzt, um die Kommunikation zwischen dem Sicherheitsmodulcontainer und dem weiteren Softwarecontainer zu schützen. Insbesondere kann zwischen dem Sicherheitsmodulcontainer und dem weiteren Softwarecontainer ein sicherer Kommunikationskanal zum Austauschen von kryptographisch geschützten Daten bereitgestellt werden.

In Ausführungsformen ist der Sicherheitsmodulcontainer dazu eingerichtet, Daten des weiteren Softwarecontainers zu speichern, zu verschlüsseln und/oder zu entschlüsseln. Der Sicherheitsmodulcontainer kann zum Beispiel von dem weiteren Softwarecontainer verwendet werden, um Daten zu verschlüsseln und auf der Hardware-Plattform zu speichern. Der Sicherheitsmodulcontainer kann auch temporäre Arbeitsdaten des weiteren Softwarecontainers verschlüsselt zwischenzuspeichern. Dies kann auch als RAM-Encryption oder Data-in-Use-Encryption bezeichnet werden. Der Sicherheitsmodulcontainer kann auch von dem weiteren Softwarecontainer empfangene Daten verschlüsseln und an den weiteren Softwarecontainer verschlüsselt zurückschicken. Hierbei verwendet der Sicherheitsmodulcontainer insbesondere den kryptographischen Schlüssel.

Der Sicherheitsmodulcontainer kann insbesondere weiteren, regulären Softwarecontainern kryptographische Sicherheitsfunktionen bereitstellen. Die weiteren Softwarecontainer müssen nicht selbst kryptographische Sicherheitsfunktionen durchführen können und müssen auch keinen sensitiven kryptographischen Schlüssel enthalten. Insbesondere kann nur der Sicherheitsmodulcontainer kryptographische Sicherheitsfunktionen durchführen und auch nur der Sicherheitsmodulcontainer enthält kryptographische Schlüssel. Der weitere Container kann die Sicherheitsfunktionen des Sicherheitsmodulcontainers verwenden, wodurch auch die Sicherheit der Applikation des weiteren Containers erhöht werden kann.

Gemäß einer weiteren Ausführungsform wird der weitere Softwarecontainer auf derselben oder auf einer anderen Hardware-plattform als der Sicherheitsmodulcontainer ausgeführt.

Die Hardwareplattform des Sicherheitsmodulcontainers und die andere Hardwareplattform des weiteren Softwarecontainer können unterschiedliche Ausführungsumgebungen aufweisen, und können ferner über ein Netzwerk, insbesondere kryptographisch geschützt, miteinander verbunden sein. Die vorher beschriebene Container-Kommunikationsschnittstelle kann zum Datenaustausch zwischen den Containern der verschiedenen Ausführungsumgebungen dienen.

Gemäß einer weiteren Ausführungsform ist der Sicherheitsmodulcontainer dazu eingerichtet, zu überprüfen, ob der weitere Softwarecontainer auf der gleichen Hardwareplattform wie der Sicherheitsmodulcontainer ausgeführt wird. Insbesondere wird der sichere Kommunikationskanal zwischen dem Sicherheitsmodulcontainer und dem weiteren Softwarecontainer nur aufgebaut, wenn der weitere Softwarecontainer auf der gleichen Hardware-plattform wie der Sicherheitsmodulcontainer ausgeführt wird.

Zur Überprüfung, ob die beiden Softwarecontainer auf der gleichen Hardwareplattform ausgeführt sind, kann der weitere Softwarecontainer beispielsweise eine Authentisierungsinformation, die er von der Hardwareplattform, auf welcher er ausgeführt wird, erhalten hat, an den Sicherheitsmodulcontainer übertragen. Der Sicherheitsmodulcontainer vergleicht die über den weiteren Softwarecontainer empfangene Authentisierungsinformation mit einer Authentisierungsinformation von der Hardware-plattform, auf welcher der Sicherheitsmodulcontainer ausgeführt wird, und kann somit bestimmen, ob der weitere Softwarecontainer auf der gleichen Hardwareplattform wie der Sicherheitsmodulcontainer ausgeführt wird.

Gemäß einer weiteren Ausführungsform wird die mindestens eine kryptographische Sicherheitsfunktion nach dem Standard PKCS#11 durchgeführt.

Gemäß einer weiteren Ausführungsform ist die Hardwareplattform als Hardware-Sicherheitsmodul ausgebildet. Der Sicherheitsmodulcontainer wird insbesondere auf dem Hardware-Sicherheitsmodul ausgeführt. Weil das HSM eine Hardware-geschützte Plattform ist, kann die Sicherheit des Sicherheitsmodulcontainers und des HSM bei Zusammenwirken des Sicherheitsmodulcontainer und des HSM erhöht werden.

Gemäß einer weiteren Ausführungsform wird ein Computerprogrammprodukt vorgeschlagen, auf welchem ein zuvor und im Folgenden beschriebenes Container-Image gespeichert ist. Das Speichermedium kann ein flüchtiger oder nicht-flüchtiger Datenspeicher sein, zum Beispiel Speicherkarte, USB-Stick, CD-ROM, DVD oder Blu-Ray Disc. Das Container-Image kann auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Das Container-Image ist in einer Variante kryptographisch geschützt (z.B. digital signiert oder verschlüsselt). Das Container-Image kann mit einem kryptographischen Schlüssel einer vorgegebenen Ausführungsplattform verschlüsselt sein. Dadurch kann das Container-Image nur auf der vorgesehenen Ausführungsplattform ausgeführt werden.

Gemäß einer weiteren Ausführungsform wird ein Verfahren vorgeschlagen, bei dem mindestens eine kryptographische Sicherheitsfunktion eines Hardware-Sicherheitsmoduls mit einem Sicherheitsmodulcontainer durchgeführt wird.

Gemäß einer weiteren Ausführungsform wird in dem Verfahren der Sicherheitsmodulcontainer durch ein Ausführen eines zuvor und im Folgenden beschriebenes Computer-Images in einer zugehörigen Containerausführungsumgebung einer Hardwareplattform ausgebildet.

Die für das vorgeschlagene Computer-Image beschriebenen Ausführungsformen und Merkmale gelten für das vorgeschlagene Verfahren und für das vorgeschlagene Computerprogrammprodukt entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform des Container-Images, Computerprogrammprodukts und Verfahren hinzufügen.

Weitere vorteilhafte Ausgestaltungen und Aspekte der Erfindung sind Gegenstand der Unteransprüche sowie der im Folgenden beschriebenen Ausführungsbeispiele. Im Weiteren wird die Erfindung anhand von bevorzugten Ausführungsformen unter Bezugnahme auf die beigelegten Figuren näher erläutert.
Fig. 1 zeigt eine Hardwareplattform gemäß einer ersten Ausführungsform; und
Fig. 2 zeigt eine Hardwareplattform gemäß einer zweiten Ausführungsform.

In den Figuren sind gleiche oder funktionsgleiche Elemente mit denselben Bezugszeichen versehen worden, sofern nichts anderes angegeben ist.

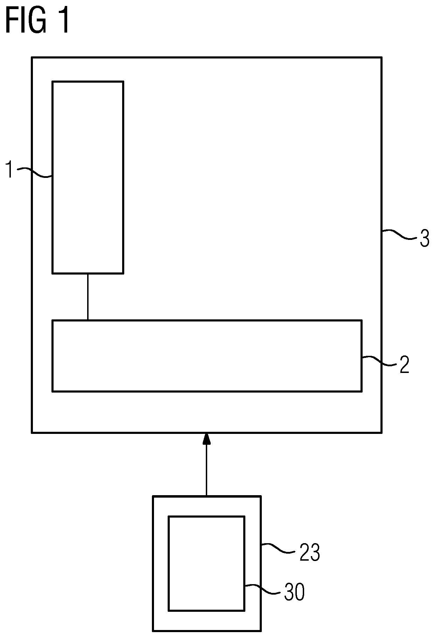

Die Fig. 1 zeigt eine Hardwareplattform 3 gemäß einer ersten Ausführungsform, welche eine Containerausführungsumgebung 2 und einen Sicherheitsmodulcontainer 1 umfasst. Die Hardware-plattform 3 ist ein Rechner. Auf dem Rechner 3 ist die Containerausführungsumgebung 2 vorgesehen, welche eine geschützte Docker-Ausführungsumgebung mit einer hohen Sicherheitsstufe ist. Die Docker-Ausführungsumgebung 2 wird durch eine Speicherverschlüsselung geschützt. Der Rechner 3 kann ein auf einem Computerprogrammprodukt 23 gespeichertes Computer-Image 30 als Software empfangen. Das Computerprogrammprodukt 23 ist eine DVD. Zum Empfangen des Computer-Images 30 weist der Rechner 3 einen nicht dargestellten DVD-Player auf, in den ein Benutzer die DVD 23 mit dem Computer-Image 30 einlegen kann.

Das Computer-Image 30 enthält kryptographisch verschlüsselte, geheime Daten und ist nur in sicheren Ausführungsumgebungen mit hohen Sicherheitsstufen ausführbar. Somit ist das Computer-Image 30 mit der geschützte Docker-Ausführungsumgebung 2 ausführbar.

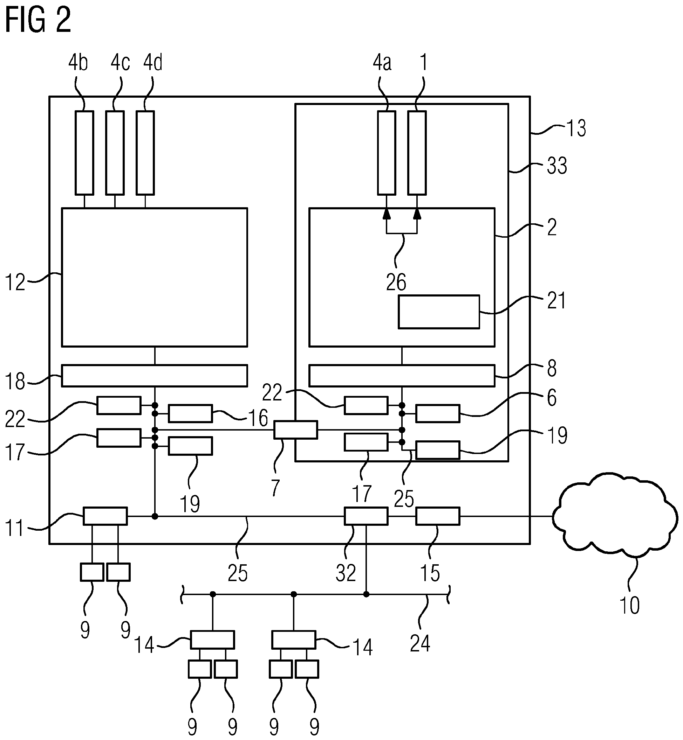

Das Computer-Image 30, welches ein Docker-kompatibles Computer-Image 30 ist, wird in dem Rechner 3 anhand der Docker-Ausführungsumgebung 2 ausgeführt, wodurch der Sicherheitsmodulcontainer 1 als Software erstellt wird. Der Sicherheitsmodulcontainer 1 ist ein Softwarecontainer, der kryptographische Sicherheitsfunktionen eines Hardware-Sicherheitsmoduls (HSM) durchführen kann. Unter anderem kann der Sicherheitsmodulcontainer 1 auf einen kryptographischen Sicherheitsschlüssel der geschützten Docker-Ausführungsumgebung 2 zugreifen, und mit diesem intern verschlüsselten Daten entschlüsseln, sowie von dem Rechner 3 empfangene Daten verschlüsseln und verschlüsselt speichern. Die Sicherheitsfunktionen des Sicherheitsmodulcontainers 1 werden im Folgenden mit Bezug auf die Fig. 2 beschrieben.

Die Fig. 2 zeigt eine Hardwareplattform 13 gemäß einer zweiten Ausführungsform. Die Hardwareplattform 13 ist hier ein Steuergerät, welches über ein Steuernetzwerk 24 mit weiteren Steuergeräten 14 kommuniziert. Das Steuernetzwerk 24 ist ein Profibus-Netzwerk, welches über eine Netzwerkschnittstelle 32 mit dem Steuergerät 13 verbunden ist. Die Steuergeräte 13, 14 dienen zur Steuerung von Feldgeräten 9, welche Aktoren und Sensoren sind.

Integriert in das Steuergerät 13 befindet sich eine weitere Hardwareplattform 33, welche als ein eigenständiger Rechner ausgebildet ist. Der Rechner 33 unterscheidet sich von dem Rechner 3 aus der Fig. 1 lediglich dadurch, dass er in dem Steuergerät 13 integriert ist und mit diesem kommuniziert.

Die beiden Hardwareplattformen 13, 33 umfassen jeweils ein Betriebssystem 8, einen Sicherheitsprozessor 22, einen Hardware-Trust-Anchor 6, 16, einen RAM-Speicher 17, einen Flash-Speicher 19, eine Containerausführungsumgebung 2, 12 und Softwarecontainer 1, 4a - 4d. Das Steuergerät 13 und der Rechner 33 sind über eine Intercontainerschnittstelle 7 gekoppelt, über welche sie Daten austauschen. Innerhalb des Steuergeräts 13 und des Rechners 33 werden Daten über einen internen Bus 25 übertragen. Der RAM- und der Flash-Speicher 17, 19 sind zum Speichern bzw. Zwischenspeichern von Sensordaten von den Feldgeräten 9 und von Steuerdaten für die Feldgeräte 9 geeignet. Das Steuergerät 13 ist über eine Ein- und Ausgabeschnittstelle 11 mit den zugehörigen Feldgeräten 9 gekoppelt.

Die Hardwareplattformen 13, 33 unterscheiden sich hauptsächlich durch eine Sicherheitsstufe ihrer Containerausführungsumgebungen 2, 12. Die Containerausführungsumgebung 12 ist eine reguläre Docker-Ausführungsumgebung ohne zusätzliche Sicherheitserweiterungen und ist somit wenig sicher. Auch die in der Docker-Ausführungsumgebung 12 ausgeführten Softwarecontainer 4b, 4c und 4d sind reguläre Container, die keine kryptographische Sicherheitsfunktionen geschützt durchführen können.

Die Containerausführungsumgebung 2 hingegen ist, wie bereits in Bezug auf die Fig. 1 beschrieben, eine speziell geschützte Docker-Ausführungsumgebung, welche zu ihrem Schutz eine Speicherverschlüsselungseinrichtung 21 zur Speicherverschlüsselung aufweist. In der geschützten Docker-Ausführungsumgebung 2 werden zwei Arten von Containern ausgeführt. Einerseits wird ein regulärer Container 4a ausgeführt, der ähnlich zu den Containern 4b, 4c und 4d keine kryptographische Sicherheitsfunktionen durchführen kann. Anderseits wird in der geschützten Docker-Ausführungsumgebung 2 der Sicherheitsmodulcontainer 1 ausgeführt, der wie bereits erwähnt kryptographische Sicherheitsfunktionen durchführt.

Die jeweiligen Container 4a - 4d sind Applikationen, mit welchen die Feldgeräte 9 des Steuergeräts 13 gesteuert werden können. Die Applikation des Containers 4b steuert einen Bewegungsablauf eines Feldgeräts 9, das als ein Roboterarm vorgesehen ist. Ein weiterer Container 4a ist für das versendenden der Sensordaten zuständig.

Das Steuersystem 13 ist ferner über eine Netzwerkschnittstelle 15 an einem externen Netzwerk 10 angebunden. Das externe Netzwerk 10 ist eine Mobilfunkverbindung, über welche das Steuergerät 13 mit nicht dargestellten Internet-Servern Daten austauscht. Sowohl der Datenaustausch zwischen dem Steuergerät 13 und den anderem Steuergeräten 14 über das Steuernetzwerk 24 als auch die Kommunikation mit den Internet-Servern über das externen Netzwerk 10 wird kryptographisch geschützt, um einen Schutz der ausgetauschten Daten zu gewährleisten. Die ausgetauschten Daten sind die zuvor genannten Sensordaten und Steuerdaten. Der kryptographische Schutz der Daten erfolgt mittels einer MACsec-Verschlüsselung. Diese Verschlüsselung wird mit Hilfe des Sicherheitsmodulcontainers 1 vorgenommen.

Hierzu greift der Sicherheitsmodulcontainer 1 auf einen Hardware-gebundenen kryptographischen Schlüssel zu, der in dem Hardware-Trust-Anchor 6 abgelegt ist.

Der Sicherheitsmodulcontainer 1 authentisiert ferner den Softwarecontainer 4a. Hierbei erkennt der Sicherheitsmodulcontainer 1, dass der Softwarecontainer 4a an derselben Ausführungsumgebung 2 derselben Hardwareplattform 33 wie der Sicherheitsmodulcontainer 1 ausgeführt wird. Der Sicherheitsmodulcontainer 1 errichtet daraufhin einen sicheren Kommunikationskanal 26 zwischen dem Sicherheitsmodulcontainer 1 und dem Softwarecontainer 4a, über welchen Daten kryptographisch geschützt ausgetauscht werden können. Der Softwarecontainer 4a überträgt Sensordaten an den Sicherheitsmodulcontainer 1 über den sicheren Kommunikationskanal 26. Der Softwarecontainer 1 verschlüsselt diese Daten anhand des aus dem Hardware-Trust-Anchor 6 erhaltenen kryptographischen Schlüssels mit einem MACsec-Verschlüsselungsprotokoll. Die verschlüsselten Sensordaten werden über den sicheren Kommunikationskanal 26 zurück an den Softwarecontainer 4a übertragen. Der Softwarecontainer 4a stellt diese verschlüsselte Sensordaten dem externen Netzwerk 10 zur Verfügung. In weiteren Varianten (nicht dargestellt) kann statt MACsec auch z.B. IPsec, TLS, S/MIME, JWE (JSON Web Encryption), JOSE (JSON Object Signing and Encryption), XML-Encryption oder XML-Signature verwendet werden.

Der Softwarecontainer 4a, welcher selbst nicht zur Datenverschlüsselung geeignet ist, kann die Sicherheitsfunktion des Sicherheitsmodulcontainers 1 benutzen und von dem Sicherheitsmodulcontainer 1 kryptographisch verschlüsselte Sensordaten erhalten, die auf sichere Weise an die Internet-Server übertragen werden können. Dadurch wird die Sicherheit der Sensordatenübertragung erheblich erhöht.

Ferner nutzt auch der Softwarecontainer 4b, der zur Steuerung des Bewegungsablaufs des Roboterarms 9 vorgesehen ist, die Sicherheitsfunktionen des Sicherheitsmodulcontainers 1. Zur Steuerung des Roboterarms 9 erhält der Softwarecontainer 4b nämlich verschlüsselte Steuerdaten über das Steuernetzwerk 24, die entschlüsselt werden müssen, damit der Roboterarm gesteuert werden kann. Hierzu kommuniziert der Softwarecontainer 4b mit dem Sicherheitsmodulcontainer 1 über die Intercontainerschnittstelle 7, die über einen Dual-Port-RAM realisiert ist. Der Softwarecontainer 4b übersendet die empfangenen verschlüsselten Steuerdaten an den Sicherheitsmodulcontainer 1, welcher auf einen geeigneten in dem Sicherheitsmodulcontainer abgelegten kryptographischen Schlüssel zugreift, und damit die Steuerdaten entschlüsselt. Die entschlüsselten Steuerdaten werden über die Intercontainerschnittstelle 7 zurück an den Softwarecontainer 4b gesendet, der mit den entschlüsselten Steuerdaten über die Ein- und Ausgabeschnittstelle 11 den Roboterarm 9 steuern kann.

Der Softwarecontainer 4b benutzt die kryptographische Entschlüsselungssicherheitsfunktion des Sicherheitsmodulcontainers 1, obwohl der Softwarecontainer 4b nicht auf derselben Hardwareplattform 33 wie der Sicherheitsmodulcontainer 1 ausgeführt wird. Der Sicherheitsmodulcontainer 1 ermöglicht dem Steuergerät 13 somit, verschlüsselte Daten zu empfangen, zu entschlüsseln und diese zur Steuerung der Feldgeräte 9 anzuwenden. Die Sicherheit des Steuergeräts 13 wird dadurch erhöht.

Obwohl die vorliegende Erfindung anhand von Ausführungsbeispielen beschrieben wurde, ist sie vielfältig modifizierbar. Die Sicherheitsfunktionen des Sicherheitsmodulcontainers 1 sind beliebig wählbar. Auch die Anzahl und Typ der beschriebenen Hardwareplattformen 3, 13, 33, Softwarecontainern 4a - 4d, Sicherheitsmodulcontainern 1, Schnittstellen 7, 11, 15, 32, der Speicher 17, 19 usw. sind veränderbar. Die Ausführungsumgebung kann zum Beispiel auch eine RKT-Ausführungsumgebung sein. Die diversen weiteren Softwarecontainer 4a - 4d können für beliebige Applikationen geeignet sein. Die Hardwareplattform 3, 13, 33 können in einem beliebigen Netzwerk angeordnet sein, beispielsweise in einem Internet-der-Dinge-Netzwerk.

### Bezugszeichenliste

- 1: Sicherheitsmodulcontainer
- 2, 12: Containerausführungsumgebung
- 3, 13, 33: Hardwareplattform
- 4a - 4d: weiterer Softwarecontainer
- 6, 16: Hardware-Trust-Anchor
- 7: Intercontainerschnittstelle
- 8, 18: Betriebssystem
- 9: Feldgerät
- 10: externes Netzwerk
- 11: Ein- und Ausgabeschnittstelle
- 14: weitere Steuergeräte
- 15: externe Kommunikationsstelle
- 17: RAM
- 19: Flash-Speicher
- 20: Steuergerät
- 21: Speicherverschlüsselungseinrichtung
- 22: Sicherheitsprozessor
- 23: Computerprogrammprodukt
- 24: Steuernetzwerk
- 25: interner Bus
- 26: sicherer Kommunikationskanal
- 30: Container-Image
- 32: Steuernetzwerkschnittstelle

## Patentansprüche

1. Container-Image (30), welches, wenn es in einer zugehörigen Containerausführungsumgebung (2) einer Hardwareplattform (3, 33) ausgeführt wird, einen Sicherheitsmodulcontainer (1) ausbildet; wobei der Sicherheitsmodulcontainer (1) ein Softwarecontainer ist, der dazu eingerichtet ist, mindestens eine kryptographische Sicherheitsfunktion eines Hardware-Sicherheitsmoduls durchzuführen, wobei die mindestens eine kryptographische Sicherheitsfunktion umfasst:
Authentisieren der Hardwareplattform (3, 33), auf der der Sicherheitsmodulcontainer (1) ausgeführt wird.

2. Container-Image nach Anspruch 1, wobei die mindestens eine kryptographische Sicherheitsfunktion umfasst:
Ausführen eines kryptographischen Algorithmus;
Speichern und/oder Ermitteln eines kryptographischen Schlüssels;
Verschlüsseltes Speichern von Daten;
Verschlüsseln von Daten;
Entschlüsseln von Daten;
Authentisieren eines weiteren Softwarecontainers (4a - 4d) ;
Speichern einer Initialisierungsinformation eines Pseudozufallszahlengenerators;
Generieren von Pseudozufallszahlen mit dem Pseudozufallszahlengenerator; und/oder
Zugreifen auf einen Hardware-Trust-Anchor der Hardware-plattform (3, 33) .

3. Container-Image nach Anspruch 2, wobei das Ermitteln des kryptographischen Schlüssels unter Berücksichtigung einer Sicherheitsstufe der Hardwareplattform (3, 33) und/oder der Containerausführungsumgebung (2) erfolgt.

4. Container-Image nach Anspruch 2 oder 3, wobei der kryptographische Schlüssel derart an einen vorbestimmten Hardwareplattformtyp gebunden ist, dass der Sicherheitsmodulcontainer (1) die mindestens eine Sicherheitsfunktion nur durchführen kann, wenn ein Hardwareplattformtyp der Hardwareplattform (3, 33) dem vorbestimmten Hardwareplattformtyp entspricht.

5. Container-Image nach einem der Ansprüche 1 bis 4, wobei der Sicherheitsmodulcontainer (1) dazu eingerichtet ist, kryptographisch verschlüsselte Daten mit einem weiteren Softwarecontainer (4a - 4d) auszutauschen.

6. Container-Image nach Anspruch 5, wobei der weitere Softwarecontainer (4a - 4d) auf derselben oder auf einer anderen Hardwareplattform (3, 33) als der Sicherheitsmodulcontainer (1) ausgeführt wird.

7. Container-Image nach Anspruch 5 oder 6, wobei der Sicherheitsmodulcontainer (1) dazu eingerichtet ist, Daten des weiteren Softwarecontainers (4a - 4d) zu speichern, zu verschlüsseln und/oder zu entschlüsseln.

8. Container-Image nach einem der Ansprüche 5 bis 7, wobei der Sicherheitsmodulcontainer (1) dazu eingerichtet ist, zu überprüfen, ob der weitere Softwarecontainer (4a - 4d) auf der gleichen Hardwareplattform (3, 33) wie der Sicherheitsmodulcontainer (1) ausgeführt wird.

9. Container-Image nach einem der Ansprüche 1 bis 8, wobei die mindestens eine kryptographische Sicherheitsfunktion nach dem Standard PKCS#11 durchgeführt wird.

10. Container-Image nach einem der Ansprüche 1 bis 9, wobei die Hardwareplattform (3, 33) als Hardwaresicherheitsmodul ausgebildet ist.

11. Computerprogrammprodukt, auf welchem ein Container-Image (30) nach einem der Ansprüche 1 bis 10 gespeichert ist.

12. Verfahren, bei dem mindestens eine kryptographische Sicherheitsfunktion eines Hardware-Sicherheitsmoduls mit einem Sicherheitsmodulcontainer (1) durchgeführt wird, wobei der Sicherheitsmodulcontainer ein Softwarecontainer ist, wobei ein Image-Container in einer zugehörigen Containerausführungsumgebung einer Hardwareplattform ausgeführt wird, um den Sicherheitsmodulcontainer auszubilden, wobei die mindestens eine kryptographische Sicherheitsfunktion umfasst:
Authentisieren der Hardwareplattform (3, 33), auf der der Sicherheitsmodulcontainer (1) ausgeführt wird.

## Claims

1. Container image (30) which, when executed in an associated container execution environment (2) of a hardware platform (3, 33), forms a security module container (1); wherein the security module container (1) is a software container that is configured so as to perform at least one cryptographic security function of a hardware security module, wherein the at least one cryptographic security function comprises:
authenticating the hardware platform (3, 33) on which the security module container (1) is executed.

2. Container image according to Claim 1, wherein the at least one cryptographic security function comprises:
executing a cryptographic algorithm;
storing and/or determining a cryptographic key;
the encrypted storage of data;
encrypting data;
decrypting data;
authenticating a further software container (4a - 4d);
storing initialization information of a pseudorandom number generator;
generating pseudorandom numbers using the pseudorandom number generator; and/or
accessing a hardware trust anchor of the hardware platform (3, 33).

3. Container image according to Claim 2, wherein the cryptographic key is determined taking into account a security level of the hardware platform (3, 33) and/or of the container execution environment (2).

4. Container image according to Claim 2 or 3, wherein the cryptographic key is linked to a predetermined hardware platform type such that the security module container (1) is able to perform the at least one security function only when a hardware platform type of the hardware platform (3, 33) corresponds to the predetermined hardware platform type.

5. Container image according to one of Claims 1 to 4, wherein the security module container (1) is configured so as to exchange cryptographically encrypted data with a further software container (4a - 4d).

6. Container image according to Claim 5, wherein the further software container (4a - 4d) is executed on the same hardware platform (3, 33) as or a different hardware platform (3, 33) from the security module container (1).

7. Container image according to Claim 5 or 6, wherein the security module container (1) is configured so as to store, to encrypt and/or to decrypt data of the further software container (4a - 4d).

8. Container image according to one of Claims 5 to 7, wherein the security module container (1) is configured so as to check whether the further software container (4a - 4d) is executed on the same hardware platform (3, 33) as the security module container (1).

9. Container image according to one of Claims 1 to 8, wherein the at least one cryptographic security function is performed in accordance with the PKCS#11 standard.

10. Container image according to one of Claims 1 to 9, wherein the hardware platform (3, 33) is designed as a hardware security module.

11. Computer program product on which a container image (30) according to one of Claims 1 to 10 is stored.

12. Method, in which at least one cryptographic security function of a hardware security module is performed using a security module container (1), wherein the security module container is a software container, wherein an image container is executed in an associated container execution environment of a hardware platform in order to form the security module container, wherein the at least one cryptographic security function comprises:
authenticating the hardware platform (3, 33) on which the security module container (1) is executed.

## Revendications

1. Image (30) de conteneur, qui, lorsqu'elle est réalisée dans un environnement (2) de réalisation de conteneur associé d'une plateforme (3, 33) matérielle, constitue un conteneur (1) de module de sécurité, le conteneur (1) de module de sécurité étant un conteneur de logiciel conçu pour effectuer au moins une fonction de sécurité cryptographique d'un module de sécurité matériel, la au moins une fonction de sécurité cryptographique comprenant :
l'authentification de la plateforme (3, 33) matérielle, sur laquelle le conteneur (1) de module de sécurité est réalisé.

2. Image de conteneur suivant la revendication 1, dans laquelle la au moins une fonction de sécurité cryptographique comprend :
la réalisation d'un algorithme cryptographique ;
la mise en mémoire et/ou la détermination d'une clé cryptographique ;
la mise en mémoire chiffrée de données ;
le chiffrement de données ;
le déchiffrement de données ;
l'authentification d'un autre conteneur (4a - 4d) de lociciel ;
la mise en mémoire d'une information d'initialisation d'un générateur de nombres pseudo-aléatoires ;
la production de nombres pseudo-aléatoires par le générateur de nombres pseudo-aléatoires ; et/ou
l'accès à une hardware-trust-anchor de la plateforme (3, 33) matérielle.

3. Image de conteneur suivant la revendication 2, dans laquelle la détermination de la clé cryptographique s'effectue en tenant compte d'un étage de sécurité de la plateforme (3, 33) matérielle et/ou de l'environnement (2) de réalisation de conteneur.

4. Image de conteneur suivant la revendication 2 ou 3, dans laquelle la clé cryptographique est reliée à un type de plateforme matérielle déterminé à l'avance, de manière à ce que le conteneur (1) de module de sécurité puisse n'effectuer la au moins une fonction de sécurité que si un type de la forme (3, 33) de la plateforme matérielle correspond au type de forme de la plateforme matérielle déterminé à l'avance.

5. Image de conteneur suivant l'une des revendications 1 à 4, dans laquelle le conteneur (1) de module de sécurité est conçu pour échanger des données chiffrées cryptographiquement avec un autre conteneur (4a - 4d) de logiciel.

6. Image de conteneur suivant la revendication 5, dans laquelle l'autre conteneur (4a - 4d) de logiciel est réalisé sur la même ou sur une autre plateforme (3, 33) matérielle que le conteneur (1) de module de sécurité.

7. Image de conteneur suivant la revendication 5 ou 6, dans laquelle le conteneur (1) de module de sécurité est conçu pour mettre en mémoire des données de l'autre conteneur (4a - 4d) de logiciel, les chiffrer et/ou les déchiffrer.

8. Image de conteneur suivant l'une des revendications 5 à 7, dans laquelle le conteneur (1) de module de sécurité est conçu pour contrôler si l'autre conteneur (4a, 4d) de logiciel est réalisé sur la même plateforme (3, 33) matérielle que le conteneur (1) de module de sécurité.

9. Image de conteneur suivant l'une des revendications 1 à 8, dans laquelle la au moins une fonction de sécurité cryptographique est effectuée suivant la norme PKCS#11.

10. Image de conteneur suivant l'une des revendications 1 à 9, dans laquelle la plateforme (3, 33) matérielle est réalisée sous la forme d'un module de sécurité matériel.

11. Produit de programme d'ordinateur, sur lequel est mise en mémoire une image (30) de conteneur suivant l'une des revendications 1 à 10.

12. Procédé, dans lequel on effectue au moins une fonction de sécurité cryptographique d'un module de sécurité matériel par un conteneur (1) de module de sécurité, le conteneur de module de sécurité étant un conteneur de logiciel, dans lequel on réalise un conteneur d'image dans un environnement de réalisation de conteneur associé d'une plateforme matérielle, afin de constituer le conteneur de module de sécurité, la au moins une fonction de sécurité cryptographique comprenant :
l'authentification de la plateforme (3, 33) matérielle, sur laquelle le conteneur (1) de module de sécurité est réalisé.
